# EUROPEAN PATENT APPLICATION

(11) **EP 2 244 222 A1**
(43) Date of publication of application: **27.10.2010**
(21) Application number: 09158377.3
(22) Date of filing: 21.04.2009
(51) Int. Cl.: G06Q 90/00

(54) **A method for managing resources data of users within a manufacturing executing system**

(71) Applicant: SIEMENS AKTIENGESELLSCHAFT, 80333 München (DE)
(72) Inventor: Russo, Francesco, 16011, Arenzano (GE) (IT); Dellacha, Alessio, 16166, Genua (IT)
(74) Representative: Fischer, Michael

(57) **Abstract**

A method for managing resources data is presented for allowing at least one user to access one of operating levels within a manufacturing executing system (MES), comprising the steps of:
a) selecting resources data from a database that present an allowances requirement for a user's access,
b) classifying selected resources data in a hierarchical tree by means of son-father assignments related to the operating levels so that only the main father of said tree contains a token of said user;
c) storing in said database the hierarchical tree and said token in a macro-resource data;
d) assigning the macro-resource data to said user;
e) loading the macro-resource data at least the first time the user initiates an access to be allowed.

## Description

The present invention relates to a method for managing resources data (also commonly called "resources") of users within a manufacturing executing system (MES), wherein the wording "resources" relates to a right for accessing a group of scheduled operating levels in the whole infrastructure of said MES.

As it is well known, a method for scheduling manufacturing processes planned by an Enterprise Resource Planning (ERP) and produced by a shop floor, provides a Manufacturing Executing System (MES) for scheduling and implementing the scheduled manufacturing processes and controlling the corresponding production steps at plant floor.

In particular, the Enterprise Resource Planning (ERP) is a system including hardware devices and corresponding software applications for planning the business resources of an enterprise, i.e. material provisions, human resource managements, purchasing, orders, profits, finance, inventory controls, customer managements, etc., while the term "shop floor" has been used to indicate a system supporting the control of single machines involved in the manufacturing processes, for example by measuring the number of pieces produced per hour by each machine or the functioning parameters thereof, the quality of the pieces produced and so on.

MES is an intermediate layer providing computing machines and software tools between the ERP upper layer and the shop floor lower layer, including a software tool for production order management, which receives requests of production from the ERP, and a software tool for production modeling, which supports the phases of selecting and managing the resources to be involved in the manufacturing processes, i.e. employees, machines and materials, in order to realize a planned manufacturing process within required time constrains.

Therefore, manufacturing execution systems require modeling plant equipment for both scheduling and controlling activities. More particular, the manufacturing execution systems require reliable instruments in order to manage some resources in term of rights of a user to access an application over the distributed multi-client architecture which is usually present in an ordinary manufacturing environment.

Typically, said resources are organized in some groups like logical structures in order to simplify the assignment of user's (e.g. for accessing, programming, controlling, etc. an applications for a manufacturing module in the MES) on one or more multiple configurations of a MES or a part thereof. Such an assignation of a user to a group is usually provided in a database over a registered association of a user's token with all the group resources. By this way, if a query (e.g. for checking the right) is initiated in said database in order to allow an access for a user, each group cannot be processed directly by said query because of the logical structure of the group itself. In other words, that means that each one of the resources within a group has to be interrogated one by one over the query. This is a first drawback in common methods of management resources adapted to a MES, especially if a special resource has to be customized for variable users like persons working on a MES.

A second drawback relies in that in a multilayer operating environment (e.g. over a multilevel software programming one like GUI, API-, CORE-levels...) a user (or software developer) that creates or works generally on operating means (like commands for MES modules) that interacts with said multilayer operating environment has to get a generic acquaintance for all resources for easily accessing this complex environment. In other words, a selection of necessary resources for a user and each one of the levels in the environment is not provided in a reliable distinguishable manner according to the "kind" of each user. This aspect can lead to some risk of damages on operating means in a level that should be protected from a user working in another level.

It is possible to add or to delete a resource into or from a group (e.g. by means of a query of "searching in the group" and adding or deleting a data of resource), but this actualizations are also causing some possible alteration(s) of the token of user(s). That means that all applications scheduling processes within a MES have to be rebuilt before they can be executed so that said added/deleted resource does not infringe potential rights of involved users. This rebuilding effort is consequently too high, especially for purpose of a flexible resource management. As well, in the running phase of a MES, like a production line of products under high rate, such a rebuilding of the whole applications (because for example of a minor change of an operator in said production line) should be executed very fast without slowing the production and putting essential or vital resources in a penalizing stand-by.

In the field of operating transactions US 20030061216 A1 presents for example a system and method for managing objects and resources with access rights embedded in nodes within a hierarchical tree structure. The system includes a host, housing a Web server, a database server, an entitlement server, and a transaction server; a network, such as the Internet or an intranet; and one or more client PCs. The system includes a host, housing a Web server, a database server, an entitlement server, and a transaction server; a network, such as the Internet or an intranet; and one or more client PCs. This document focuses especially on a method of inputting a transaction in XML form for use in the determination and granting of access rights embedded in nodes within a hierarchical tree structure. The method includes receiving transaction data from the external system; parsing and validating the XML; determining whether the received data is valid; adding access data to the entitlement server and text content to the database server; determining whether an error occurred; sending an error message to the external system; and sending a confirmation message to the external system.
This last example is well suit for one or more typical transaction servers, but the present invention involves a manufacturing executing system (like a production line of a fabric) which is more complex than a single transaction server because its modules or applications can be added, removed, replaced and so on, so that the management of resources has to be adaptable to different configurations of the MES in a high flexible manner.

It is therefore one goal of the present invention to provide a method for managing resources data (also commonly called "resources") for allowing a user to access one of operating levels within a MES in a flexible manner, and particularly in a rapid and secure manner as well.

This goal is achieved according to the invention by a method for managing resources data for allowing at least one user to access one of operating levels within a manufacturing executing system (MES), comprising the steps of:
a) selecting resources data from a database that present an allowances requirement for a user's access,
b) classifying selected resources data in a hierarchical tree by means of son-father assignments related to the operating levels so that only the main father of said tree contains a token of said user;
c) storing in said database the hierarchical tree and said token in a macro-resource data;
d) assigning the macro-resource data to said user;
e) loading the macro-resource data at least the first time the user initiates an access to be allowed.

By this way, the macro-resource permits to structure all necessary resources data according to a user (software developer, operator, controller, equipment...) that works within a MES infrastructure. Especially by a change of a user, the MES can further operate without interruption because of no necessary re-initialisation of the whole applications for driving the MES. A recompiling of all resources and the management thereof is no more required. A high flexibility grade is hence provided, as well as a high rate by possible changes within the MES in term of resources.

A main claim presents this preferred embodiment of the invention.

Preferred embodiments of the present invention are also described in a further set of dependent claims.

Especially an advantageous use of the method according to the invention is presented for avoiding time interruptions of an operating manufacturing executing system (MES) with a macro-resource, wherein:
- by adding, removing, replacing or relocating an equipment within the manufacturing executing system (MES), wherein said equipment is directly access-able and controlled by a user, and
- the loading of macro-resource related to the user's token initiates a real-time reconfiguration for a restartless operating of the manufacturing executing system (MES).

Further preferred embodiments of the present invention are described hereinafter more detailed with reference to the following drawings which depict in:

### Brief description of the drawings

- Figure 1: schematically a basic macro-resource according to the invention;
- Figure 2: schematically a macro-resource applied to a multileveled operating interface;
- Figure 3: schematically a constant configuration of the macro-resource is remaining by changing "son"-resources data;
- Figures 4A, 4B: schematically a method for organizing the resource data in the macro-resource for a user;
- Figures 5A, 5B: schematically a method for inserting intermediate resources in the macro-resource;
- Figures 6A, 6B: schematically a use of the method according to the invention by relocating an equipment from a location to another location in a production line as MES.

### Detailed description

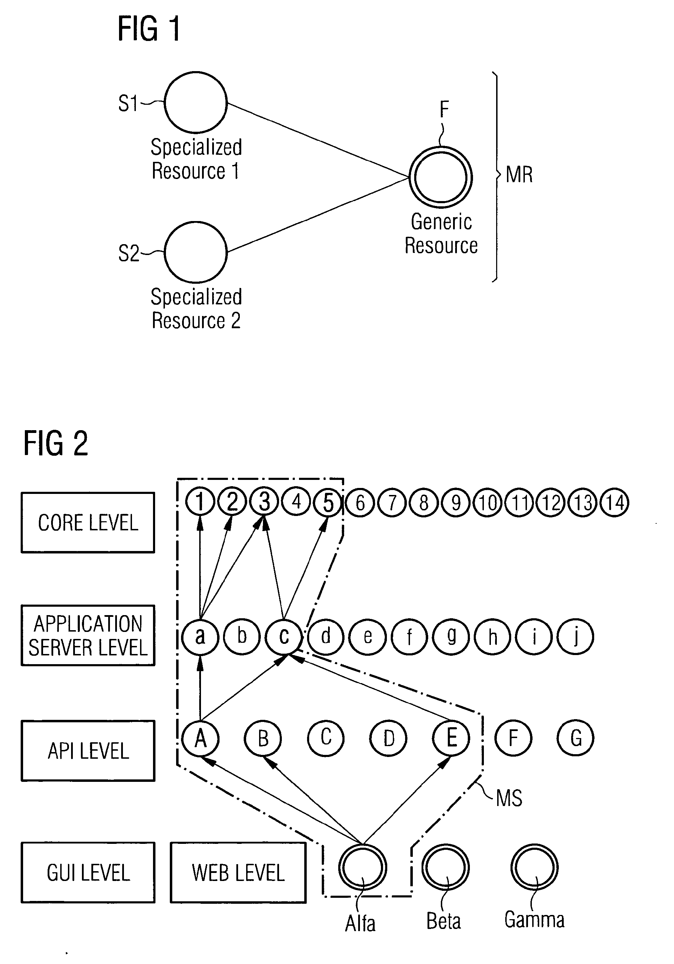

**Figure 1** presents schematically an example of a basic macro-resource MS according to the method for managing resources of the invention with three resources comprising one father F with two sons S1, S2. Each one of the "son"-resources S1, S2 (also called specialized resources) are assigned to the "father"-resource F (also called generic resource). The father resource F could also be or contain the user's token.

**Figure 2** presents schematically an example of a more complex tree structure of a macro-resource MS according to the son-father-hierarchy in figure 1 applied to a multileveled operating interface. Here, some operating levels are accessed over each level of said multileveled operating interface, especially related to one of following levels: Core, Application Server, API (= Application Programming Interface), GUI (= Graphical User Interface) and Web-based. Each levels provides its corresponding resources (here four levels related respectively to one of four groups of resources {Alfa, Beta, Gamma}, {A, B, C, D, E, F, G}, {a, b, c, d, e, f, g, h, i, j}, {1, 2, 3, 4, 5, 6, 7, 8, 9, 10, 11, 12, 13, 14}). Principally by accessing the GUI- or Web-levels over the corresponding resource "Alfa", a user (or its token) assigned to the macro-resource MS according to the invention can access :
- the API-level with resources "A, B, E" (= son-resources assigned to father-resource "Alfa" of GUI- or Web-level),
- the Application Server-level with resources "a, c" ("a, c" are son-resources assigned to father-resource "A" and "c" is also son-resource assigned to father-resource "E"),
- the Core level with resources "1, 2, 3, 5" ("1, 2, 3" are son-resources of father-resources "a", "3, 5" are son-resources of father-resources "c").

As well a user can also access operating means of a MES over the other levels than the GUI- or Web-levels, and the same structure will apply by means of the macro-structure MS.

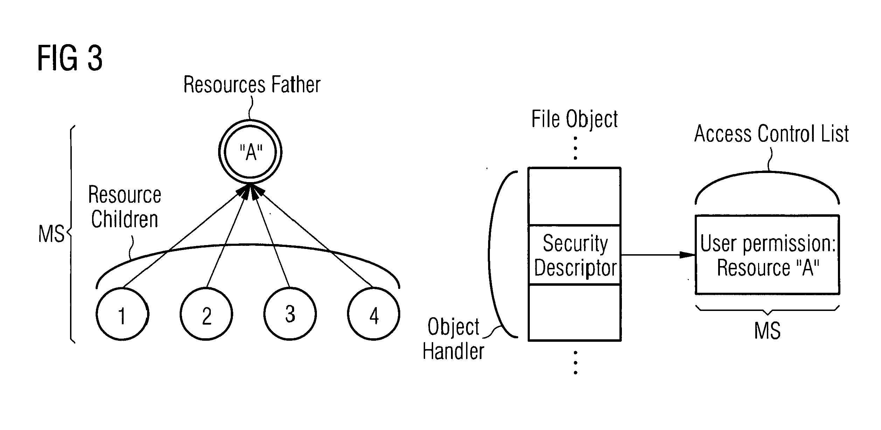

By adding, deleting or replacing a resource data in/from the macro-resource MS, the macro-resource is actualized so that the token of user remains unchanged as main assigned father of the macro-resource. This provides a high flexibility of resource updating without stopping the whole operating means and disturbing other users.
This aspect is also represented in **figure 3** wherein schematically a constant configuration of the macro-resource MS is remaining in an access control list by changing anyone of "son" or "children"-resources data "1, 2, 3, 4" that are assigned to a father-resource "A" in the macro-resource MS. This enables that an object handler for MES-purposes operates on a file object by means of a security descriptor that only needs to check the macro-structure MS for giving a permission to a user for accessing the main father-resource "A" (other resources will be accessible from "A" by the macro-structure MS). If one of the "children"-resources is changed the access control list remains unchanged. This is very advantageous because it decreases the number of checking steps for permission to access all other children-resources, so that an access can be permitted and provided for a user in a very short time.

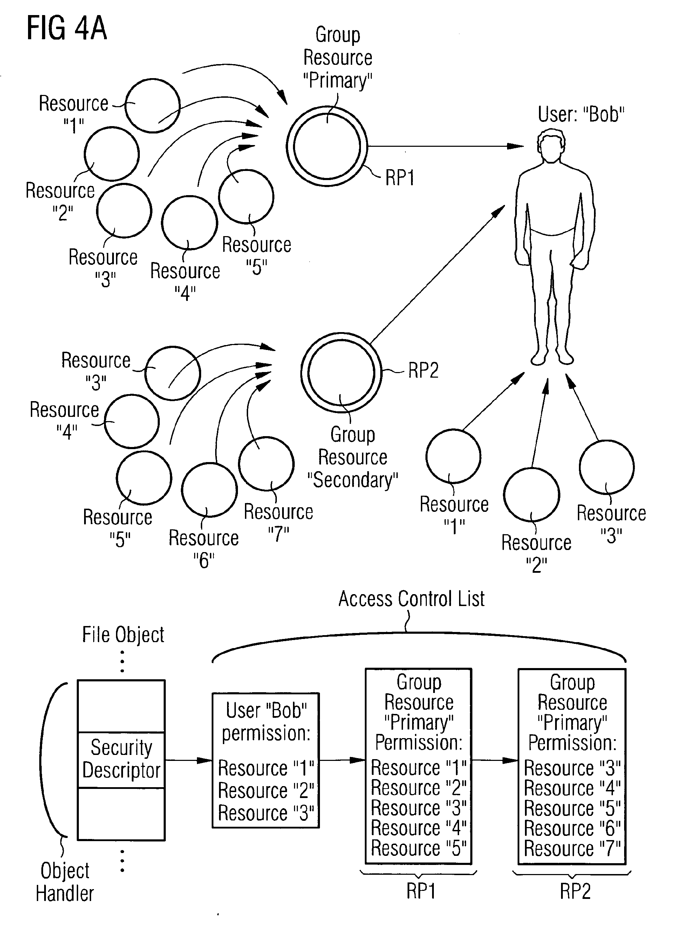

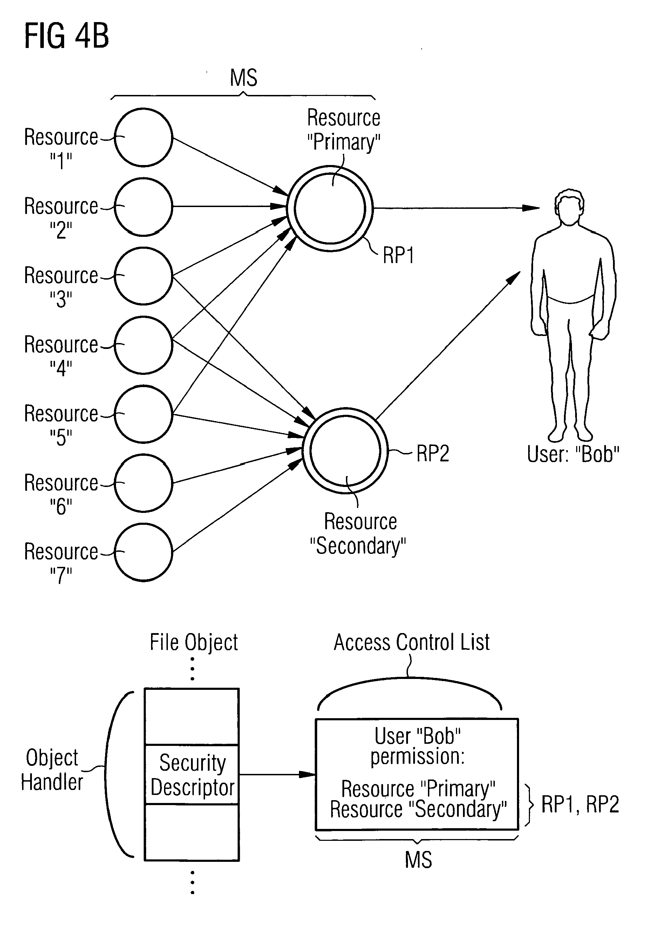

**Figures 4A** **and** **4B** presents schematically a method for organizing the resource data in the macro-resource for a user called "Bob".
The upper part of figure 4A shows the tree of assignments of resources to "Bob". Some of the resources "1, 2, 3" are directly assigned to "Bob", other ones (here two groups of children-resources {1, 2, 3, 4, 5}, {3, 4, 5, 6,7})are respectively assigned to a primary and a secondary parent-resource "RP1, RP2" which forms two resource groups that are themselves assigned to "Bob".
The bottom part of figure 4A shows like in figure 3 an object handler for MES-purposes that operates on a file object by means of a security descriptor for checking firstly the permission for Bob to access the three direct resources "1, 2, 3", secondly the permission to access RP1 and its children-resources {1, 2, 3, 4, 5} and thirdly the permission to access RP2 and its further corresponding children-resources {3, 4, 5, 6 ,7}. This whole tree structure of resources and groups thereof forms a so called access control list to be secure for enabling Bob to access all resources.

The upper part of figure 4B shows now the tree of assignments of resources to "Bob" after implementing the method according to the invention in that the resources have been newly managed by means of a macro-resource MS wherein the three previous direct resources "1, 2, 3" have been introduced (or replaced) in one set of children-resources by keeping them under the both previous groups of resources RP1, RP2. This is possible because by considering a combination of all resources within RP1 and RP2, the three previous direct children-resources "1, 2, 3" were comprised in this combination. A redundancy of these last resources can be hence advantageously reduced in that in the son-father-tree structure with a simple group of single children-resources will be assigned to the only both resource "father"-groups RP1, RP2 and then to Bob. For this purpose, the macro-resource MS in figure 4B will comprise only the connections between sons and father that were necessary in figure 4A. This hierarchical structure of the macro-resource MS allows avoiding redundant children-resources and speeding up their access.
The bottom part of figure 4B shows analogically a size reduction of the access control list that delivers permission to Bob to access all the resources by means of the macro-resource MS according to the invention, now over only both father-resources RP1, RP2 and no more directly over single redundant children-resources. An advantage in term of time is hence provided for checking such a permission as well as for operating the MES by using a lighter amount of resource links.

Generally, the method according to this last embodiment of the invention provides further following summarized steps:
- first resource data {1, 2, 3} directly assigned to a user's token "Bob" are compared with second resource data {1, 2, 3, 4, 5}, {3, 4, 5, 6 ,7} of at least one resources' group RP1, RP2 directly assigned to the same user's token;
- if one of the first resource data is identical to one of the second resource data, the one of the first resource data is deleted in the hierarchical tree so that only groups of resources are directly assigned to the user's token by means of a reduced amount of linked resources.

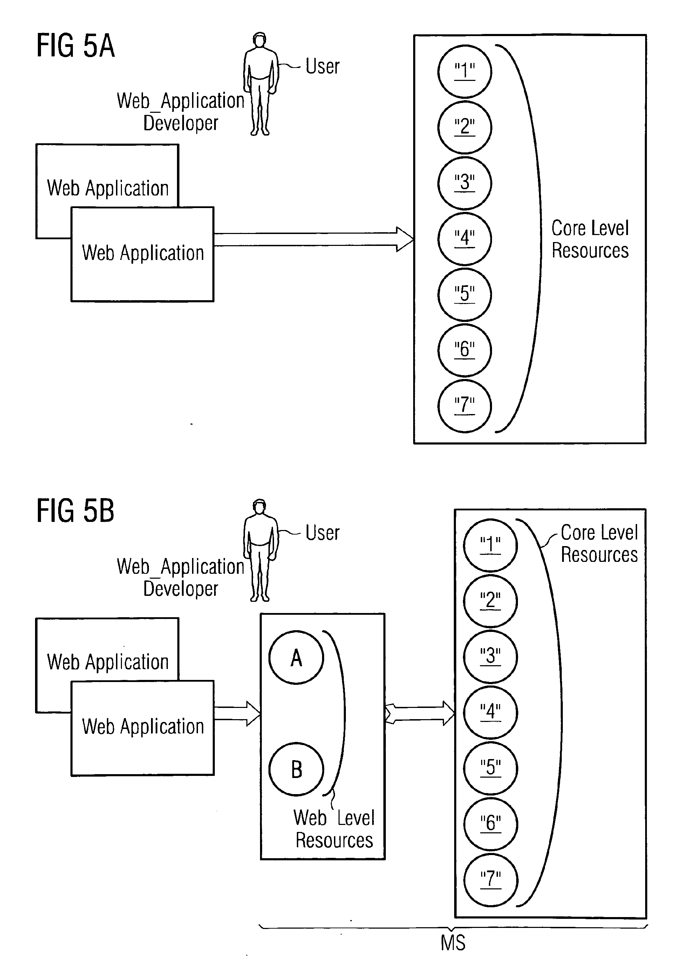

**Figures 5A, 5B** present a further embodiment of the invention, and schematically a method for inserting intermediate resources in the macro-resource MS, wherein intermediate leveled resources data A, B are introduced in the hierarchical tree, especially for purpose of implementing a secured assess constraint in another level.
Figure 5A comprise no insertion of intermediate resource and figure 5B comprise them. By this way, the permission for accessing some children-resources {1, 2, 3, 4, 5, 6 ,7} can be also simplified over a reduced amount of "permission"-links from a level with web applications and their intermediate resources A, B (for example here, A and B are interpretable as father-resources for the children-resources {1, 2, 3, 4, 5, 6 ,7} and as children-resources for the web applications and a user working on them).

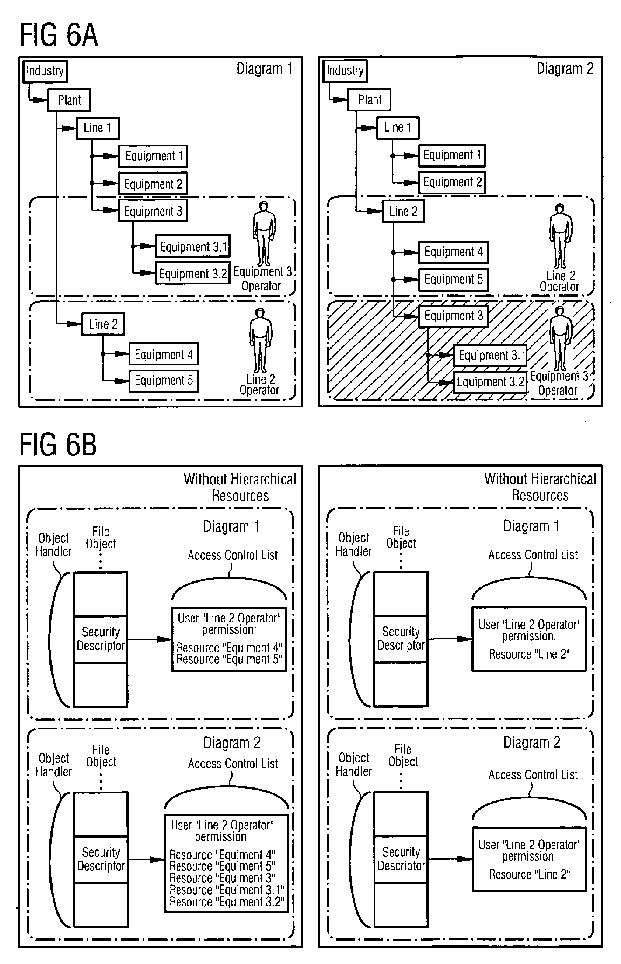

**Figures 6A** presents schematically an example of a use of the method according to the invention by relocating an equipment (see "equipment 3" comprising "equipment 3.1" and "equipment 3.2" controlled by a user "Equipment 3 Operator") from a location "line1" (= first section of production line) to another location "line2" (=second section of production line) in a production line commanded by a MES in an industrial plant "plant, industry".
On the "diagram 1", the first section "line1" comprises the previous located equipment in addition to other equipments "equipment 1, equipment 2".
On the "diagram 2", the second section "line2" comprises the relocated equipment in addition to other equipments "equipment 4, equipment 5".

**Figures 6B** refers to both diagrams 1, 2 of figure 6A and presents an object handler for MES-purposes operating on a file object by means of a security descriptor that checks the resources for giving a permission to the user (here "Equipment 3 Operator) for accessing this resource or not. The link part of figure 6B comprises the management of resources to be checked without implementing the method according to the invention for each diagram 1, 2. The right part of figure 6B comprises the management of resources to be checked with implementing the method according to the invention for each diagram 1, 2.
These representations show very clearly that the access control list without implementing the method according to the invention comprises a very high amount of children-resources as well as under-children-resources for the second section "line2". This amount is also variable between before and after the relocation of the equipment. That means that a new large and time consuming re-initialisation of the resource management for checking all permissions is required in order to operate with "line2" before and after the relocation. On the opposite, the access control list on the right side of figure 6B remains advantageously identical before and after the relocation of equipment. Furthermore this access control list contains only a single children-resource ("User Line 2 Operator") and does not need to be changed because of the added resource related to the inserted equipment, because the resource of this equipment can be accessed independently over the introduced macro-resource (not represented) of the (also relocated) user itself.

## Claims

1. A method for managing resources data for allowing at least one user to access one of operating levels within a manufacturing executing system (MES), comprising the steps of:
a) selecting resources data from a database that present an allowances requirement for a user's access,
b) classifying selected resources data in a hierarchical tree by means of son-father assignments related to the operating levels so that only the main father of said tree contains a token of said user;
c) storing in said database the hierarchical tree and said token in a macro-resource data;
d) assigning the macro-resource data to said user;
e) loading the macro-resource data at least the first time the user initiates an access to be allowed.

2. The method according to claim 1, wherein the operating levels are accessed over each level of a multileveled operating interface, especially related to one of following levels: core, application server, API, GUI and Web.

3. The method according to claim 1 or 2, wherein by adding, deleting or replacing a resource data the macro-resource is actualized so that the token of user remains unchanged as main father of the macro-resource.

4. The method according to any of the previous claims, wherein:
- first resource data directly assigned to a user's token are compared with second resource data of at least one resources' group directly assigned to the same user's token;
- if one of the first resource data is identical to one of the second resource data, the one of the first resource data is deleted in the hierarchical tree so that only groups of resources are directly assigned to the user's token.

5. The method according to any of the previous claims, wherein intermediate leveled resources data are introduced in the hierarchical tree, especially for purpose of implementing a secured assess constraint in another level.

6. Use of the method according to any of the previous claims for avoiding time interruptions of an operating manufacturing executing system (MES) with a macro-resource, wherein:
- by adding, removing, replacing or relocating an equipment within the manufacturing executing system (MES), wherein said equipment is directly access-able and controlled by a user (OPE3), and
- the loading of macro-resource related to the user's token initiates a real-time reconfiguration for a restartless operating of the manufacturing executing system (MES).
